# EUROPEAN PATENT SPECIFICATION

(11) **EP 3 637 718 B1**
(45) Date of publication and mention of the grant of the patent: **30.03.2022**
(21) Application number: 18199697.6
(22) Date of filing: 10.10.2018
(51) Int. Cl.: H04L 29/06, G06N 20/00, G06F 21/56

(54) **METHOD AND IDENTIFICATION SYSTEM FOR IDENTIFYING SUSPICIOUS TRAFFIC**
VERFAHREN UND IDENTIFIKATIONSSYSTEM ZUR IDENTIFIZIERUNG VON VERDÄCHTIGEN DATENVERKEHR
PROCÉDÉ ET SYSTÈME D'IDENTIFICATION PERMETTANT D'IDENTIFIER UNE CIRCULATION SUSPECTE

(43) Date of publication of application: 15.04.2020
(73) Proprietor: Rohde & Schwarz GmbH & Co. KG, 81671 München (DE)
(72) Inventor: EKAMBARAM, Prabhakaran, 768964 Singapore (SG)
(74) Representative: Prinz & Partner mbB

(56) References cited:
- EP-A1- 3 306 890
- US-A1- 2002 184 528
- US-A1- 2010 250 918

## Description

The invention relates to a method for identifying suspicious traffic. Further, the invention relates to an identification system for identifying suspicious traffic.

A modern communication device, for instance a user end device like a tablet, a mobile phone or rather a smartphone, exchanges data such as audio data, video data, text data as well as picture data, thereby generating traffic between the communication device as well as a network or another communication device.

Further, the traffic occurred or the data exchanged may comprise malicious data that is generated due to an application running on the communication device wherein the application is eavesdropping by controlling a microphone or rather a camera of the communication device.

In the prior art, a so-called man in the middle proxy, MITM proxy, is used for identifying such an application that generates malicious data within the data exchanged wherein the MITM proxy is used to decrypt all the data exchanged and perform analyses on the decrypted data. However, this approach is very timeconsuming since all exchanged data has to be decrypted and analyzed. Further, this approach requires that the communication device, namely the device under test, is configurated previously in an appropriate manner so as to communicate via the MITM proxy.

Moreover, EP 3 306 890 A1 shows a method and an apparatus for detecting malicious data traffic in an encrypted data flow by using a capture content routine in order to capture contextual traffic data from one or more unencrypted data packets, which is forwarded to a classification routine that processes the contextual traffic data by extracting features. The classification routine is trained to identify malicious data traffic by comparing the contextual traffic data received with trained data.

Accordingly, there is a need for a cost-efficient as well as fast manner to identify malicious data within the data exchanged in order to be enabled to identify a compromised device under test.

The invention is defined by the appended claims.

The invention provides a method for identifying suspicious traffic, comprising the following steps:
- establishing a communication between a device under test and a network simulator;
- monitoring exchanged data between the device under test and the network simulator;
- identifying the type of application that causes the data exchange by means of a deep packet inspection module, wherein the deep packet inspection module uses at least part of the header information of the data exchanged to identify the type of application that causes the data exchange; and
- using prerecorded data in connection with an artificial intelligence module to identify malicious data within the data exchanged, wherein the artificial intelligence module uses signaling information, internet protocol information and deep packet inspection information to identify unexpected packets in the data exchanged and the traffic content type without decrypting the data exchanged by using the information directly accessible.

Further, the invention provides an identification system for identifying suspicious traffic, comprising a device under test and a network simulator, wherein the network simulator is configured to monitor exchanged data between the device under test and the network simulator, wherein a deep packet inspection module is provided that is configured to identify the type of application that causes the data exchange by using at least part of the header information of the data exchanged, wherein an artificial intelligence module is connected with the network simulator, and wherein the artificial intelligence module is configured to use prerecorded data to identify malicious data within the data exchanged, and wherein the artificial intelligence module is configured to use signaling information, internet protocol information and deep packet inspection information to identify unexpected packets in the data exchanged and the traffic content type without decrypting the data exchanged by using the information directly accessible.

In fact, an automatically controlled method for identifying suspicious traffic as well as an automatic identification system are provided wherein the artificial intelligence module may be logically connected to the network simulator so that the data monitored by the network simulator can be forwarded to the artificial intelligence module for further processing, in particular for analysis. Hence, the artificial intelligence module is configured to receive the respective exchanged data monitored by the network simulator itself.

The prerecorded data may be assigned to data used for training or rather learning the artificial intelligence module so that the artificial intelligence module is enabled to decide whether or not malicious data is provided within the data exchanged and monitored. For instance, the prerecorded data is used to identify certain patterns which can be compared with the data monitored for identifying any malicious data.

The network simulator may be a mobile network simulator that is configured to simulate a mobile network.

The network simulator may further comprise a module, in particular a software module, which correlates signaling information and internet protocol messages.

In general, the artificial intelligence module is configured to generate adaptive modelling by means of artificial intelligence computational algorithms using learning rules that help to identify suspicious traffic, namely malicious data within the data exchanged.

In fact, no configuration of the device under test is required previously. Furthermore it is not necessary to decrypt encrypted data used by the exchanged data.

In general, an infected device under test can be identified easily that is sending information due to eavesdropping, for instance by using the microphone for audio data or the camera for video data.

Furthermore, the artificial intelligence module may comprise an artificial intelligence network.

Since the artificial intelligence module is connected with the network simulator, the monitored data is acquired by the artificial intelligence module wherein the acquired data is processed within at least one artificial intelligence computational algorithm for evaluating the exchanged data monitored so as to identify malicious data due to learning rules assigned to the artificial intelligence computational algorithm.

The at least one artificial intelligence computational algorithm or rather learning rules take(s) the prerecorded data into account which were inter alia used for training the artificial intelligence module to be enabled to identify malicious data within the data exchanged.

In fact, the traffic content type, namely audio, video, text or picture, can be identified. Hence the content of the data exchanged may be identified.

According to an aspect, at least a portion of the data exchanged is encrypted. The respective encrypted data exchanged may be monitored directly and acquired by the artificial intelligence module without the need of decrypting the respective data to identify malicious data. Thus, the identification can be done in a fast manner.

Particularly, all of the data exchanged is encrypted or at least all of the data monitored by the network simulator.

Hence, the traffic content type, namely audio, video, text or picture, is identified without decrypting the data exchanged by using information directly accessible. This information is taken into account by the artificial intelligence module that also takes prerecorded data in account for identifying malicious data within the data exchanged.

In fact, the deep packet inspection module identifies the type of application that causes the data exchange. Hence, the respective application running on the device under test may be identified that causes the malicious data or rather the traffic that is monitored appropriately. The application may be a software or rather a program running on the device under test, for instance an application downloaded. The application may be a social network application or rather a video platform application.

Generally, deep packet inspection is a type of data processing that inspects in detail the data being exchanged over a network, in particular the data assigned to a respective packet in the traffic.

Further, the deep packet inspection module uses at least part of the header information of the data exchanged to identify the type of application that causes the data exchange. Thus, a higher layer protocol or rather header information is taken into account by the deep packet inspection module for identifying the type of application that causes the data exchange. For instance, a hypertext transfer protocol (HTTP), a real-time transport protocol (RTP), a secure sockets layer (SSL), a user datagram protocol (UDP) and/or a simple mail transfer protocol (SMTP) may be identified and taken into account. Generally, the header information refers to supplemental data placed at the beginning of a block of data, which is also called payload.

The deep packet inspection module may be part of the network simulator or rather the artificial intelligence module. Alternatively, the deep packet inspection module is provided separately wherein it is connected to at least one of the network simulator or rather the artificial intelligence module.

In fact, the artificial intelligence module and/or the deep packet inspection module may be software running on the network simulator that is assigned to a hardware component.

Further, the artificial intelligence module is trained by machine learning. Hence, the artificial intelligence module uses artificial intelligent computational algorithm that use learning rules that have been trained previously.

In addition, the artificial intelligence module uses signaling information, internet protocol information and deep packet inspection information. Thus, the respective information obtained by monitoring the exchange data via the network simulator is used by the artificial intelligence module. The internet protocol information may correspond to the internet protocol address. The deep packet inspection information may relate to a hostname of a server with which the device under test tries to establish a connection. The signaling information may relate to throughput.

The signaling information, the internet protocol information and/or the deep packet inspection information may relate to the information directly accessible. Therefore, the signaling information, the internet protocol information and/or the deep packet inspection information is taken into account together with the prerecorded data to identify the traffic content type of the exchanged data.

The respective information is used to identify packets in the data exchanged. In other words, the packets causing the traffic are identified. Thus, the information can be used for identifying certain packets in the data exchanged (traffic) that may be suspected to be suspicious traffic.

In fact, the respective information is used to identify unexpected packets in the data exchanged. The unexpected packets may relate to unexpected data causing unexpected traffic. In general, the unexpected data could be audio or rather video whenever such kind of data exchange (traffic) is not expected due to the type of application identified previously, for instance based on the header information of the data exchanged, in particular the packets.

Moreover, the respective information may be used to identify a certain pattern in the packets in order to identify the type of data exchanged. This ensures to identify the type of the packets. Hence, it can be verified whether or not audio data, video data, text data or rather picture data is exchanged, in particular by the respective packets identified previously. The respective kind of data exchanged can be identified due to the information taken into account by the artificial intelligence module.

In addition, the network simulator may be connected to the internet. Thus, the device under test can be tested under real conditions. In fact, it can be verified if a certain server shall be accessed. Moreover, information of the server may be identified.

In fact, the network simulator may be connected to a live network such as the internet.

Generally, the artificial intelligence module will identify malicious data within the data exchanged and/or provide traffic type of the data exchanged. For this purpose, the artificial intelligence module will take at least one of the following data/inputs into account, namely a hostname, an internet protocol address, a port, a higher layer protocol, header information, a radio link control mode, a lower Long Term Evolution (LTE) layer, an EPS bearer, the bearer type, the throughput, a Quality of Service (QoS) Class Identifier (QCI), the resource type, the duration and the content type.

Generally, the overall exchanged data corresponds to (data) traffic that comprises a sequence of (data) packets each comprising data, for instance control information and user data, which is also called payload. The control information may relate to the header information.

In terms of malicious data, the malicious data may be assigned to the payload.

Put another way, the traffic comprises several packets wherein each packet comprises at least data or rather payload. In fact, each packet comprises header information or rather control information followed by data, namely the payload. Therefore, the traffic comprises data assigned to different packets.

Further aspects and advantages of the claimed subject matter will become more readily appreciated as the same become better understood by reference to the following description, when taken in conjunction with the accompanying drawings. In the drawings:
- Figure 1 schematically shows an overview of an identification system according to the invention,
- Figure 2 schematically shows a flow-chart illustrating a method for identifying suspicious traffic, and
- Figure 3 a table illustrating information that may be taken into account by the identification system.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

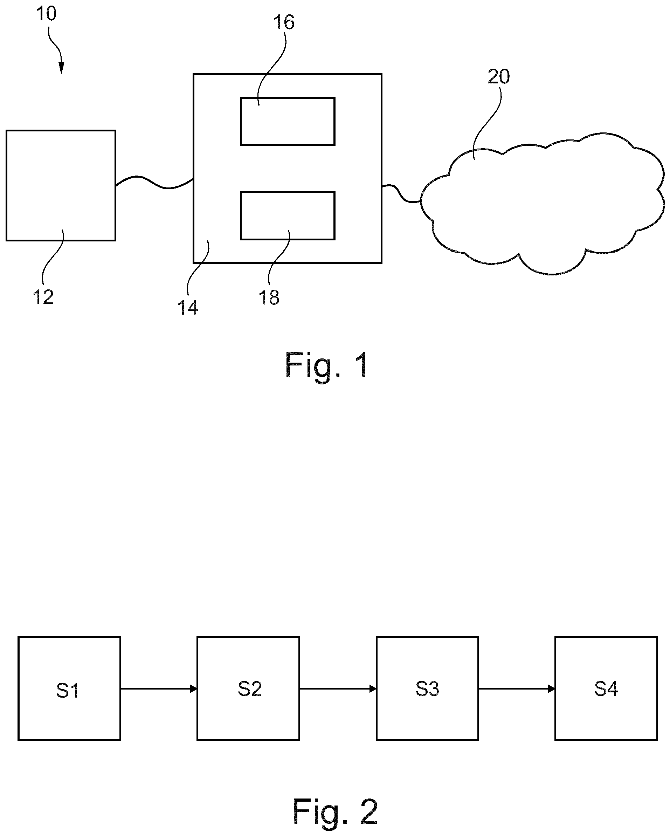

In Figure 1, an identification system 10 is shown that is used for identifying suspicious traffic.

The identification system 10 comprises a device under test 12 that is connected with a network simulator 14 that established a network connection to which the device under test 12 is connected so that data is exchanged between the device under test 12 and the network simulator 14 simulating the respective network, in particular a wireless network.

Further, the identification system 10 comprises an artificial intelligence module 16 that is connected with the network simulator 14 so that data or rather information can be exchanged between the network simulator 14 as well as the artificial intelligence module 16. The artificial intelligence module 16 may be a software module that runs on the network simulator 14 so that the data monitored by the network simulator 14 can be forwarded to the artificial intelligence module 16 directly.

In other words, the artificial intelligence module 16 is configured to acquire the data exchanged or rather monitored directly.

In addition, a deep packet inspection module 18 is provided that may be part of the network simulator 14. In fact, the deep packet inspection module 18 may also relate to a software module that runs on the network simulator 14.

Alternatively, the deep packet inspection module 18 may be established separately with regard to the network simulator 14.

In general, the deep packet inspection module 18 is used to identify the type of an application running on the device under test 12 that causes the data traffic between the device under test 12 and the network simulator 14 as will be described later with regard to Figure 2.

Figure 1 further shows that the network simulator 14 is also connected with the internet 20 so that the device under test 12 may be connected to the internet 20 via the network simulator 14. Hence, the device under test 12 may try to access servers assigned to the internet 20.

In general, the network simulator 14 is configured to monitor the exchanged data between the device under test 12 and the network simulator 14, in particular between the device under test 12 and the internet 20 wherein the network simulator 14 is interconnected between the device under test 12 and the internet 20.

In addition, the artificial intelligence module 16 is configured to use prerecorded data to identify malicious data within the data exchanged that has been monitored by the network simulator 14. Thus, the artificial intelligence module 16 is configured to acquire the respective data monitored by the network simulator 14 for analyzing purposes.

In fact, the prerecorded data that is used to identify malicious data relates to trained data so that the artificial intelligence module 16 is configured to run at least one artificial intelligence computational algorithm that takes the prerecorded data, namely the learned data or rather trained data, as well as the data monitored into account for evaluating the exchanged data, in particular for identifying malicious data in the data traffic.

Generally, malicious data may be identified due to the type of application running and the type of data identified.

With reference to Figure 2, a method for identifying suspicious traffic is described hereinafter wherein the identification system 10 shown in Figure 1 can be used.

In a first step S1, a communication between the device under test 12 and the network simulator 14 is established, for instance a wireless communication.

In a second step S2, data is exchanged between the device under test 12 and the network simulator 14, which data is monitored by the network simulator 14. The data monitored may be exchanged between the device under test 12 and the internet 20 wherein the respective data traffic runs via the network simulator 14 so that the data is also exchanged between the device under Test 12 and the network simulator 14.

For instance, the data traffic occurs due to an application running on the device under test 12 which may have access to components of the device under test 12 wherein the respective access is not intentional. For instance, audio data may be exchanged due to unwanted accessing a microphone of the device under test or rather video data may be exchanged due to unwanted accessing a camera of the device under test.

In a third step S3, the artificial intelligence module 16 connected with or rather running on the network simulator 14 acquires the respective data monitored by the network simulator 14.

In a fourth step S4, prerecorded data is used by the artificial intelligence module 16 in connection with the acquired data so as to identify malicious data within the data exchanged, namely the acquired data.

The malicious data may be identified by using the deep packet inspection module 18 inter alia so as to identify the type of application that causes the data traffic. The deep packet inspection module 18 may use at least part of the header information of the data exchanged to identify the type of application that causes the data exchange. In other words, header information of the data is taken into account by the deep packet inspection module 18.

The artificial intelligence module 16 uses at least one of signaling information, internet protocol information and deep packet information to identify the type of application is identified that causes the data exchange.

Particularly, packets in the data exchanged are identified which are suspected to contain malicious data. Accordingly, unexpected packets are identified.

Thus, the type of application is identified that causes the data exchange since certain packets are expected to be exchanged in case of a respective application running on the device under test 12. Should the artificial intelligence module 16 identify unexpected packets in the data exchanged (traffic), malicious data within the data exchanged, in particular a respective packet, may be identified.

In other words, the artificial intelligence module 16 identifies the respective kind of the packets in the data exchanged and compares the packets identified with the type of application identified previously that causes data exchange (traffic) so that the artificial intelligence module 16 may derive at the conclusion whether or not the packets identified are expected or unexpected.

In addition, the respective information may be used by the artificial intelligence module 16 to identify a certain pattern in the packets in order to identify the type of data exchanged. Thus, it can be verified by the artificial intelligence module 16 if audio, video, text or picture data is exchanged.

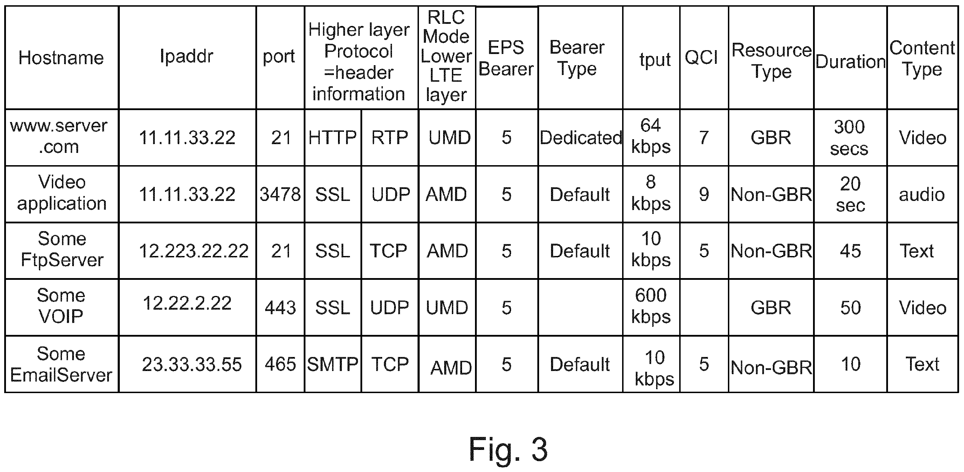

In Figure 3, a table is shown that illustrates different types of information used by the identification system 10, in particular the artificial intelligence module 16. This information may relate to a hostname, an internet protocol address, a port, a higher layer protocol, header information, a radio link control mode, a lower Long Term Evolution (LTE) layer, an EPS bearer, the bearer type, the throughput, a Quality of Service (QoS) Class Identifier (QCI), the resource type, the duration and the content type.

The prerecorded data that is used to identify malicious data or rather the trained data used by the artificial intelligence module 16 relates to the information mentioned above. Thus, the artificial intelligence module 16 will take at least one of the information mentioned above into account, which is easily and directly accessible without any decrypting, so that malicious data can be identified in a fast manner due to the artificial intelligence module 16.

In other words, the artificial intelligence module 16 identifies inter alia the type of traffic content, namely audio, video, text, picture, without decrypting encrypted data exchanged, for instance internet protocol (IP) data, since it relies on signaling information, deep packet information as well as internet protocol information instead of the decrypted content of encrypted data exchanged.

Therefore, suspicious traffic can be identified in a fast manner as well as in a cost-efficient way.

## Claims

1. A method for identifying suspicious traffic, comprising the following steps:
- Establishing a communication between a device under test (12) and a network simulator (14);
- Monitoring, by the network simulator (14), exchanged data between the device under test (12) and the network simulator (14), wherein at least a portion of the data exchanged is encrypted;
- Identifying the type of application that causes the data exchange by means of a deep packet inspection module (18), wherein the deep packet inspection module (18) uses at least part of the header information of the data exchanged to identify the type of application that causes the data exchange; and
- Using prerecorded data, by an artificial intelligence module (16) connected with the network simulator (14), to identify malicious data within the data exchanged, wherein the artificial intelligence module (16) uses signaling information, internet protocol information and deep packet inspection information to identify unexpected packets in the data exchanged and the traffic content type without decrypting the data exchanged by using information directly accessible.

2. The method according to claim 1, wherein all of the data exchanged is encrypted.

3. The method according to claim 1 or 2, wherein the artificial intelligence module(16) is trained by machine learning.

4. The method according to any of the preceding claims, wherein the respective information is used to identify a certain pattern in the packets in order to identify the type of data exchanged.

5. The method according to any of the preceding claims, wherein the network simulator (14) is connected to the internet (20).

6. An identification system (10) for identifying suspicious traffic, comprising a device under test (12) and a network simulator (14), wherein the network simulator (14) is configured to monitor exchanged data between the device under test (12) and the network simulator (14), wherein a deep packet inspection module (18) is provided that is configured to identify the type of application that causes the data exchange by using at least part of the header information of the data exchanged, wherein at least a portion of the exchanged data is encrypted and an artificial intelligence module (16) is connected with the network simulator (14), wherein the artificial intelligence module (16) is configured to use prerecorded data to identify malicious data within the data exchanged, and wherein the artificial intelligence module (16) is configured to use signaling information, internet protocol information and deep packet inspection information to identify unexpected packets in the data exchanged and the traffic content type without decrypting the data exchanged by using the information directly accessible.

7. The identification system (10) according to claim 6, wherein the network simulator (14) is connected with the internet (20).

## Patentansprüche

1. Verfahren zum Identifizieren von verdächtigem Datenverkehr, das die folgenden Schritte umfasst:
- Aufbauen einer Kommunikation zwischen einer zu prüfenden Vorrichtung (12) und einem Netzsimulator (14);
- Überwachen der zwischen der zu prüfenden Vorrichtung (12) und dem Netzsimulator (14) ausgetauschten Daten durch den Netzsimulator (14), wobei mindestens ein Teil der ausgetauschten Daten verschlüsselt ist;
- Identifizieren des Typs der Anwendung, die den Datenaustausch verursacht, mittels eines Moduls (18) zur tiefen Paketinspektion, wobei das Modul (18) zur tiefen Paketinspektion zumindest einen Teil der Header-Informationen der ausgetauschten Daten verwendet, um den Typ der Anwendung zu identifizieren, der den Datenaustausch verursacht; und
- Verwenden von zuvor aufgezeichneten Daten durch ein Modul für künstliche Intelligenz (16), das mit dem Netzsimulator (14) verbunden ist, um bösartige Daten innerhalb der ausgetauschten Daten zu identifizieren, wobei das Modul für künstliche Intelligenz (16) Signalisierungsinformationen, Internetprotokollinformationen und Informationen der tiefen Paketinspektion verwendet, um unerwartete Pakete in den ausgetauschten Daten und die Art des Datenverkehrsinhalts zu identifizieren, ohne die ausgetauschten Daten zu entschlüsseln, indem direkt zugängliche Informationen verwendet werden.

2. Verfahren nach Anspruch 1, wobei alle ausgetauschten Daten verschlüsselt sind.

3. Verfahren nach Anspruch 1 oder 2, wobei das Modul für künstliche Intelligenz (16) durch maschinelles Lernen trainiert wird.

4. Verfahren nach einem der vorstehenden Ansprüche, wobei die jeweilige Information dazu verwendet wird, ein bestimmtes Muster in den Paketen zu erkennen, um die Art der ausgetauschten Daten zu identifizieren.

5. Verfahren nach einem der vorstehenden Ansprüche, wobei der Netzsimulator (14) mit dem Internet (20) verbunden ist.

6. Identifizierungssystem (10) zum Identifizieren von verdächtigem Datenverkehr, das eine zu prüfende Vorrichtung (12) und einen Netzwerksimulator (14) umfasst, wobei der Netzwerksimulator (14) so konfiguriert ist, dass er zwischen der zu prüfenden Vorrichtung (12) und dem Netzwerksimulator (14) ausgetauschte Daten überwacht, wobei ein Modul (18) zur tiefen Paketinspektion vorgesehen ist, das so konfiguriert ist, dass es den Typ der Anwendung, die den Datenaustausch verursacht, identifiziert, indem es zumindest einen Teil der Header-Informationen der ausgetauschten Daten verwendet, wobei zumindest ein Teil der ausgetauschten Daten verschlüsselt ist und ein Modul (16) für künstliche Intelligenz mit dem Netzwerksimulator (14) verbunden ist, wobei das Modul (16) für künstliche Intelligenz so konfiguriert ist, dass es zuvor aufgezeichnete Daten verwendet, um bösartige Daten innerhalb der ausgetauschten Daten zu identifizieren, und wobei das Modul (16) für künstliche Intelligenz so konfiguriert ist, dass es Signalisierungsinformationen, Internetprotokollinformationen und Informationen der tiefen Paketinspektion verwendet, um unerwartete Pakete in den ausgetauschten Daten und die Art des Datenverkehrsinhalts zu identifizieren, ohne die ausgetauschten Daten zu entschlüsseln, indem es die direkt zugänglichen Informationen verwendet.

7. Identifizierungssystem (10) nach Anspruch 6, wobei der Netzwerksimulator (14) mit dem Internet (20) verbunden ist.

## Revendications

1. Procédé pour identifier un trafic suspect, comprenant les étapes suivantes :
- établir une communication entre un dispositif sous test (12) et un simulateur de réseau (14) ;
- surveiller, par le simulateur de réseau (14), des données échangées entre le dispositif sous test (12) et le simulateur de réseau (14), dans lequel au moins une partie des données échangées est chiffrée ;
- identifier le type d'application qui provoque l'échange de données au moyen d'un module d'inspection approfondie des paquets (18), dans lequel le module d'inspection approfondie des paquets (18) utilise au moins une partie des informations d'en-tête des données échangées pour identifier le type d'application qui provoque l'échange de données ; et
- utiliser des données préenregistrées, par un module d'intelligence artificielle (16) connecté au simulateur de réseau (14), pour identifier des données malveillantes au sein des données échangées, dans lequel le module d'intelligence artificielle (16) utilise des informations de signalisation, des informations de protocole Internet et des informations d'inspection approfondie des paquets pour identifier des paquets inattendus dans les données échangées et le type de contenu de trafic sans déchiffrer les données échangées en utilisant des informations directement accessibles.

2. Procédé selon la revendication 1, dans lequel la totalité des données échangées sont chiffrées.

3. Procédé selon la revendication 1 ou 2, dans lequel le module d'intelligence artificielle (16) est entraîné par apprentissage machine.

4. Procédé selon l'une quelconque des revendications précédentes, dans lequel les informations respectives sont utilisées pour identifier un certain modèle dans les paquets afin d'identifier le type de données échangées.

5. Procédé selon l'une quelconque des revendications précédentes, dans lequel le simulateur de réseau (14) est connecté à Internet (20).

6. Système d'identification (10) pour identifier un trafic suspect, comprenant un dispositif sous test (12) et un simulateur de réseau (14), dans lequel le simulateur de réseau (14) est configuré pour surveiller des données échangées entre le dispositif sous test (12) et le simulateur de réseau (14), dans lequel un module d'inspection approfondie des paquets (18) est pourvu qui est configuré pour identifier le type d'application qui provoque l'échange de données en utilisant au moins une partie des informations d'en-tête des données échangées, dans lequel au moins une partie des données échangées est chiffrée et un module d'intelligence artificielle (16) est connecté au simulateur de réseau (14), dans lequel le module d'intelligence artificielle (16) est configuré pour utiliser des données préenregistrées pour identifier des données malveillantes au sein des données échangées, et dans lequel le module d'intelligence artificielle (16) est configuré pour utiliser des informations de signalisation, des informations de protocole Internet et des informations d'inspection approfondie des paquets pour identifier des paquets inattendus dans les données échangées et le type de contenu de trafic sans déchiffrer les données échangées en utilisant les informations directement accessibles.

7. Système d'identification (10) selon la revendication 6, dans lequel le simulateur de réseau (14) est connecté à Internet (20).
